# EUROPÄISCHE PATENTANMELDUNG

(11) **EP 4 257 276 A1**
(43) Veröffentlichungstag der Anmeldung: **11.10.2023**
(21) Anmeldenummer: 23159853.3
(22) Anmeldetag: 03.03.2023
(51) Int. Cl.: B23F 21/02, B23F 23/12, B23F 23/00

(54) **VERFAHREN ZUM ABRICHTEN EINER MEHRGÄNGIGEN SCHLEIFSCHNECKE**

(30) Priorität: 04.04.2022 DE 102022108041
(71) Anmelder: Kapp Niles GmbH & Co. KG, 96450 Coburg (DE)
(72) Erfinder: Grinko, Sergiy, 96450 Coburg (DE)
(74) Vertreter: Gosdin, Carstensen & Partner Patentanwälte Partnerschaftgesellschaft mbB

(57) **Zusammenfassung**

Die Erfindung betrifft ein Verfahren zum Abrichten einer mehrgängigen Schleifschnecke (1) mittels eines Abrichtwerkzeugs (2), bei dem die abrasiven Oberflächen (3) der einzelnen Gänge (4, 5, 6) der Schleifschnecke (1) nacheinander mit dem Abrichtwerkzeug (2) profiliert werden, wobei das Abrichten in mindestens zwei Gängen (4, 5, 6) mit unterschiedlichen Abrichtparametern erfolgt, so dass sich die Profilierung der abrasiven Oberflächen (3) der Gänge (4, 5, 6) voneinander unterscheiden. Um ohne Einbußen bei der Wirtschaftlichkeit ein verbessertes Schleifergebnis für das Werkstück zu erreichen, sieht die Erfindung vor, dass die Abrichtparameter so gewählt werden, dass sich die abrasiven Oberflächen (3) mindestens zweier Gänge (4, 5, 6) in Richtung der Schraubenlinie des Ganges (4, 5, 6) betrachtet voneinander unterscheiden, und/oder dass die abrasiven Oberflächen (3) der einzelnen Gänge (4, 5, 6) durch topologisches Abrichten profiliert werden, wobei über die Höhe der abrasiven Oberfläche (3) mehrere linienförmige Abrichthübe durchgeführt werden, bei denen das Abrichtwerkzeug (2) in radiale Richtung (r) der Schleifschnecke (1) in vorgegebenen Abständen (x) geführt wird, wobei die Abstände (x) in jedem Gang (4, 5, 6) konstant sind, sich aber in mindestens zwei Gängen (4, 5, 6) unterscheiden.

## Beschreibung

Die Erfindung betrifft ein Verfahren zum Abrichten einer mehrgängigen Schleifschnecke mittels eines Abrichtwerkzeugs, bei dem die abrasiven Oberflächen der einzelnen Gänge der Schleifschnecke nacheinander mit dem Abrichtwerkzeug profiliert werden, wobei das Abrichten in mindestens zwei Gängen mit unterschiedlichen Abrichtparametern erfolgt, so dass sich die Profilierung der abrasiven Oberflächen der Gänge voneinander unterscheiden.

Das Schleifen insbesondere von Zahnrädern mittels Wälzschleifen ist hinlänglich bekannt. Hierbei werden Schleifschnecken eingesetzt, die zumeist mehrere parallel zueinander verlaufende Schneckengänge aufweisen. Damit die Geometrie der Verzahnung des zu schleifenden Zahnrads präzise ist und innerhalb einer vorgegebenen Toleranz liegt, muss die Schleifschnecke sowohl vor ihrer Benutzung als auch nach einer gewissen Anzahl geschliffener Werkstücke neu abgerichtet werden. Hierbei wird häufig eine rotierende Abrichtrolle nacheinander durch die einzelnen Schneckengänge geführt und so die abrasive Oberfläche der Schneckengänge gemäß den Vorgaben profiliert.

In der Praxis wird dabei die mehrgängige Schleifschnecke mit einer bestimmten Bahngeschwindigkeit der Schnecke oder einer bestimmten Drehzahl der Abrichtrolle abgerichtet, d. h. die Drehzahl der Schleifschnecke sowie die Drehzahl der Abrichtrolle während des Abrichtvorgangs sind vorgegeben. Beim topologischen Abrichten (hierbei wird das Profil über der Zahnhöhe linienweise abgerichtet, daher auch "Zeilenabrichten" genannt) kann mit einer topologischen oder Radienrolle abgerichtet werden, wobei als relevanter Abrichtparameter das Gangzahlverhältnis und der Überdeckungsgrad (radialer Abstand der einzelnen Abrichthübe) verwendet wird.

Ein gattungsgemäßes Verfahren offenbart die DE 10 2011 115 526 A1. Hier wird zwecks Erreichens einer verbesserten Schleif-Überdeckung beim topologischen Abrichten das Abrichtwerkzeug beim Abrichten der einzelnen Gänge der Schleifschnecke von Gang zu Gang radial versetzt, wobei allerdings in jedem Gang die radiale Zustellung beim linienweisen Abrichten stets gleich groß ist.

Aus der WO 2022/028871 A1 ist es bekannt, eine Schleifschnecke mit zwei unterschiedlichen Bereichen für das Schruppen und für das Schlichten einer Verzahnung in den beiden Bereichen mit unterschiedlichen Abrichtparametern abzurichten. Für jeden Arbeitsbereich, also einmal für denjenigen für das Schuppen und einmal für denjenigen für das Schlichten, werden indes identische Abrichtparameter in jedem Schneckengang vorgesehen.

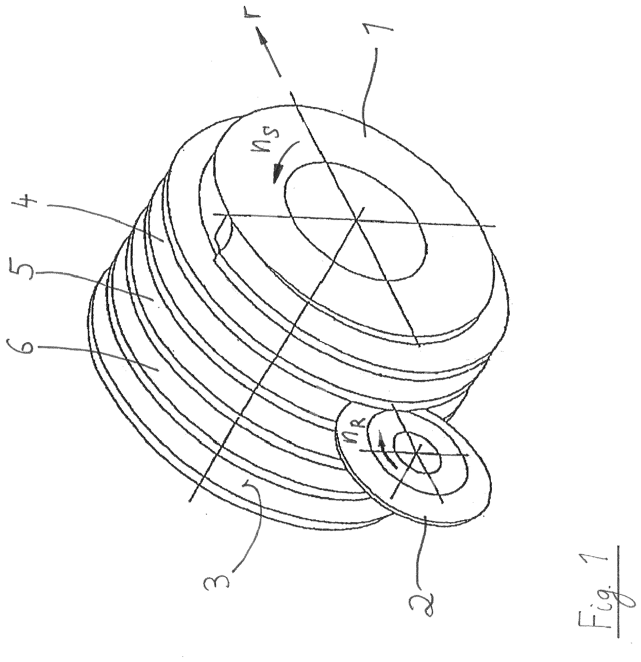

Zum insoweit bekannten Stand der Technik wird auf Figur 1 Bezug genommen, wo eine Schleifschnecke 1 zu sehen ist, die mit einem Abrichtwerkzeug 2 in Form einer Abrichtrolle abgerichtet wird, d. h. die abrasive Oberfläche 3 in den einzelnen Gängen 4, 5 und 6 der Schleifschnecke werden mit gleichen Abrichtparametern profiliert. Jeder der drei Schneckengänge 4, 5 und 6 hat also die gleiche periodische Topografie, die sich dementsprechend auf der Zahnradflanken des zu schleifenden Zahnrads nach dem Schleifen auf diesem abbildet.

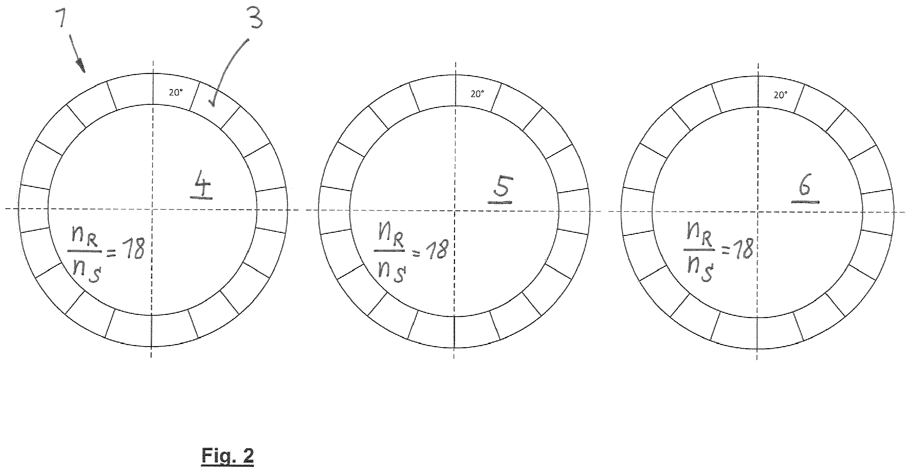

In Figur 2 ist hierzu illustriert, dass in den drei Schneckengängen 4, 5 und 6 das Verhältnisses zwischen der Drehzahl n_{R} der Abrichtrolle 2 und der Drehzahl n_{S} der Schleifschnecke 1 jeweils gleich ist und sich periodisch wiederholende Segmente über den Umfang des Schneckengangs bilden. Exemplarisch ist hier das Verhältnis zwischen den beiden genannten Drehzahlen n_{R} / n_{S} = 18, d. h. die Abrichtrolle 2 dreht 18 Mal so schnell wie die Schleifschnecke 1. Entsprechend wiederholt sich die von der Abrichtrolle auf die abrasive Oberfläche 3 aufgebrachte Form alle 20°.

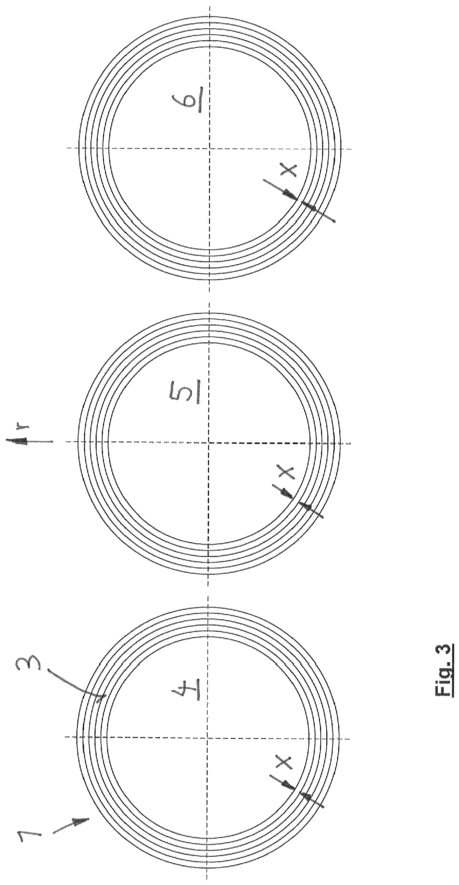

Wird topologisch abgerichtet, werden zeilenweise mehrere Abrichthübe in radialer Richtung r beanstandet vorgenommen; der Abstand zwischen zwei aufeinanderfolgenden Abrichthüben ist mit x angegeben, wie es aus Figur 3 für das vorbekannte Vorgehen ersichtlich ist. Beim topologischen Abrichten entstehen also Rillen auf der Manteloberfläche (d. h. auf der abrasiven Oberfläche) der Schneckengänge, die parallel zur Gangabwicklung verlaufen. Der Abstand der Rillen voneinander in Richtung der Ganghöhe ist dabei immer gleich und somit auch die Topografie jedes Ganges.

Die so hergestellte Topografie bildet sich auf der Zahnradflanke in entsprechender Weise ab und kann im Betrieb des Zahnrads aufgrund der Periodizität einen unruhigen Lauf hervorrufen. Daher sind derartige periodische Strukturen aus Gründen der Geräuschentwicklung im Betrieb unerwünscht.

In den Figuren 2 und 3 sind dabei schematische Darstellung der abrasiven Oberfläche skizziert, gesehen von der Stirnseite der Schleifschnecke.

Es gilt somit, dass beim vorbekannten gattungsgemäßen Verfahren alle Gänge der Schleifschnecke mit denselben Abrichtparametern profiliert werden.

Aus der DE 199 05 136 B4 ist es bekannt geworden, die Drehzahlen zwischen Abrichtrolle und Schleifschnecke während des Abrichtvorgangs zu verändern, wobei die Veränderung stochastisch erfolgt. Hiermit sollen regelmäßige Muster verhindert werden. Allerdings erfolgt auch hier die Bearbeitung aller Schneckengänge nach diesem Verfahren und somit gleich.

Eine ähnliche Lösung zeigt die DE 10 2018 126 259 A1, wobei auch hier ein regelmäßiges Muster beim Abrichten verhindert werden soll. Hierzu wird neben einer nicht-konstanten Drehzahl eine relative Zusatzbewegung vorgesehen. Auch hier gilt, dass sämtliche Schneckengänge nach diesem Verfahren und somit gleich profiliert werden.

Der Erfindung liegt die **Aufgabe** zugrunde, ein gattungsgemäßes Verfahren so fortzubilden, dass es ohne Einbußen bei der Wirtschaftlichkeit möglich ist, ein weiter verbessertes Schleifergebnis für das Werkstück zu erreichen. Insbesondere sollen so Zahnräder gefertigt werden können, die sich durch eine höhere Laufruhe auszeichnen.

Die Lös u n g dieser Aufgabe durch die Erfindung sieht vor, dass die Abrichtparameter so gewählt werden, dass sich die abrasiven Oberflächen mindestens zweier Gänge in Richtung der Schraubenlinie des Ganges betrachtet voneinander unterscheiden, und/oder dass die abrasiven Oberflächen der einzelnen Gänge durch topologisches Abrichten profiliert werden, wobei über die Höhe der abrasiven Oberfläche mehrere linienförmige Abrichthübe durchgeführt werden, bei denen das Abrichtwerkzeug in radiale Richtung der Schleifschnecke in vorgegebenen Abständen geführt wird, wobei die Abstände in jedem Gang konstant sind, sich aber in mindestens zwei Gängen (vorzugsweise in allen Gängen) unterscheiden. In letztgenanntem Falle ist bevorzugt vorgesehen, dass sich die Abstände zwischen mindestens zwei Gängen um mindestens 5 %, vorzugsweise um mindestens 10 % und besonders bevorzugt um mindestens 15 % unterscheiden.

Bevorzugt erfolgt das Abrichten in allen Gängen mit unterschiedlichen Abrichtparametern; somit unterscheidet sich die Profilierung der abrasiven Flächen in allen Gängen voneinander.

Nach einer Ausgestaltung der Erfindung kann hierbei vorgesehen sein, dass die Schleifschnecke während des Abrichtprozesses mit einer Drehzahl rotiert, wobei die Drehzahl der Schleifschnecke beim Abrichten der abrasiven Flächen eines Gangs sich in mindestens zwei Gängen (vorzugsweise in allen Gängen) unterscheidet.

Das Abrichtwerkzeug kann auch eine Abrichtrolle sein, die während des Abrichtprozesses mit einer Drehzahl rotiert, wobei die Drehzahl der Abrichtrolle beim Abrichten der abrasiven Flächen eines Gangs sich in mindestens zwei Gängen (vorzugsweise in allen Gängen) unterscheidet.

Eine besonders bevorzugte Vorgehensweise sieht vor, dass bei der Wahl der Abrichtparameter dergestalt, dass sich die abrasiven Oberflächen mindestens zweier Gänge in Richtung der Schraubenlinie des Ganges betrachtet voneinander unterscheiden, so vorgegangen wird, dass die Schleifschnecke während des Abrichtprozesses mit einer Drehzahl rotiert und das Abrichtwerkzeug eine Abrichtrolle ist, die während des Abrichtprozesses mit einer Drehzahl rotiert, wobei das Verhältnis der Drehzahlen beim Abrichten der abrasiven Flächen eines Gangs konstant ist, sich aber in mindestens zwei Gängen (vorzugsweise in allen Gängen) unterscheidet. In letztgenanntem Falle unterscheidet sich das Verhältnis der Drehzahl der Schleifschnecke und der Drehzahl der Abrichtrolle zwischen mindestens zwei Gängen vorzugsweise um mindestens 5 %, vorzugsweise um mindestens 10 % und besonders bevorzugt um mindestens 15 %.

Betreffend die genannte Richtung der Schraubenlinie des Schneckengangs sei angemerkt, dass diese zu verstehen ist als Richtung der Windung des Schneckengangs bzw. der Flankenlängsrichtung des Schneckengangs, wenn man sich also in Richtung der Wendel des Schneckengangs bewegt. Entlang dieses Weges unterscheiden sich erfindungsgemäß die abrasiven Oberflächen in mindestens zwei (bevorzugt in allen) Schneckengängen infolge der Wahl der Abrichtparameter.

Eine weitere Ausführungsform der Erfindung sieht vor, dass die Schleifschnecke während des Abrichtprozesses rotiert und das Abrichtwerkzeug eine Abrichtrolle ist, die während des Abrichtprozesses rotiert, wobei das Abrichten in einem Gang im Gleichlauf (Schleifschnecke und Abrichtrolle drehen gleichsinnig) von Schleifschnecke und Abrichtrolle erfolgt und das Abrichten in mindestens einem anderen Gang im Gegenlauf (Schleifschnecke und Abrichtrolle drehen gegensinnig) von Schleifschnecke und Abrichtrolle erfolgt.

Natürlich kann auch vorgesehen werden, dass die einzelnen obigen Maßnahmen, mit denen die unterschiedlichen Abrichtparameter in den einzelnen Gängen der Schleifschnecke realisiert werden, in Kombination eingesetzt werden. Demgemäß kann die Veränderung der Drehzahl der Schleifschnecke, die Veränderung der Drehzahl der Abrichtrolle, die Veränderung des Verhältnisses der Drehzahlen von Schleifschnecke und Abrichtrolle, die Veränderung der unterschiedlichen radialen Abstände beim topologischen Abrichten und des Einsatzes von Gleichlauf/Gegenlauf in beliebiger Kombination vorgenommen werden.

Eine mögliche Abrichtvorrichtung für eine mehrgängige Schleifschnecke umfasst eine Aufnahme und einen Drehantrieb für die abzurichtende Schleifschnecke und eine Aufnahme und vorzugsweise einen Drehantrieb für ein Abrichtwerkzeug, wobei Steuerungs- oder Regelungsmittel vorgesehen sind, mit denen die Abrichtparameter, insbesondere die Drehzahl der Schleifschnecke und/oder die Drehzahl des als Abrichtrolle ausgebildeten Abrichtwerkzeugs, beim Abrichten der abrasiven Flächen der Gänge der Schleifschnecke in mindestens zwei Gängen (vorzugsweise in allen Gängen) unterschiedlich vorgegeben werden können.

Ferner kann auch ein Softwareprogramm zur Bestimmung von Abrichtparametern für das Abrichten einer mehrgängigen Schleifschnecke mit einem Abrichtwerkzeug zur Durchführung des vorgeschlagenen Verfahrens vorgesehen sein, welches nach Vorgabe von Abrichtparametern für das Abrichten der Schleifschnecke unterschiedliche Abrichtparameter für die verschiedenen Gänge der Schleifschnecke ermittelt und einer Maschinensteuerung vorgibt.

Das vorgeschlagene Konzept stellt also auf ein variables Abrichten der einzelnen Gänge einer mehrgängigen Schleifschnecke ab. Innerhalb eines Ganges wird mit gleichbleibenden Abrichtparametern gearbeitet, allerdings unterscheiden sich die Parameter von Schneckengang zu Schneckengang.

Was die unterschiedlichen Parameter anbelangt, ist primär an eine Veränderung der Drehzahlen der Schleifschnecke und/oder einer Abrichtrolle gedacht, wobei sich insbesondere das Verhältnis besagter Drehzahlen von Schneckengang zu Schneckengang verändert. Ferner können unterschiedliche Bahngeschwindigkeiten (Geschwindigkeit, mit der das Abrichtwerkzeug relativ zur abzurichtenden abrasiven Oberfläche der Schleifschnecke geführt wird) zwischen den einzelnen Schneckengängen vorgesehen werden.

Sofern das Abrichten topologisch erfolgt, kann mit unterschiedlichen Überdeckungsgraden (Abständen in radialer Richtung zwischen den einzelnen Abrichthüben) gearbeitet werden.

Insbesondere beim Schleifen von Verzahnungen kann so die Laufruhe des Zahnrads im Betrieb verbessert werden.

Mit der vorgeschlagenen Vorgehensweise wird die Periodizität der Topografie der abrasiven Oberfläche in den Schneckengängen und somit die Topografie der Zahnflanken des Werkstücks nach dem Schleifen positiv beeinflusst, so dass Vorschubmarkierungen eliminiert werden können; dies führt zu einer höheren Laufruhe der Zahnräder im Getriebe.

In den Figuren sind Ausführungsbeispiele der Erfindung dargestellt.
- Fig. 1: zeigt in perspektivischer Darstellung eine mehrgängige Schleifschnecke, welche durch eine Abrichtrolle abgerichtet wird,
- Fig. 2: zeigt schematisch für drei Gänge der Schleifschnecke das Vorgehen beim Abrichten gemäß dem Stand der Technik,
- Fig. 3: zeigt schematisch für drei Gänge der Schleifschnecke das Vorgehen beim topologischen Abrichten gemäß dem Stand der Technik,
- Fig. 4: zeigt schematisch für drei Gänge der Schleifschnecke das Vorgehen beim Abrichten gemäß einer Ausführungsform der Erfindung und
- Fig. 5: zeigt schematisch für drei Gänge der Schleifschnecke das Vorgehen beim topologischen Abrichten gemäß einer anderen Ausführungsform der Erfindung.

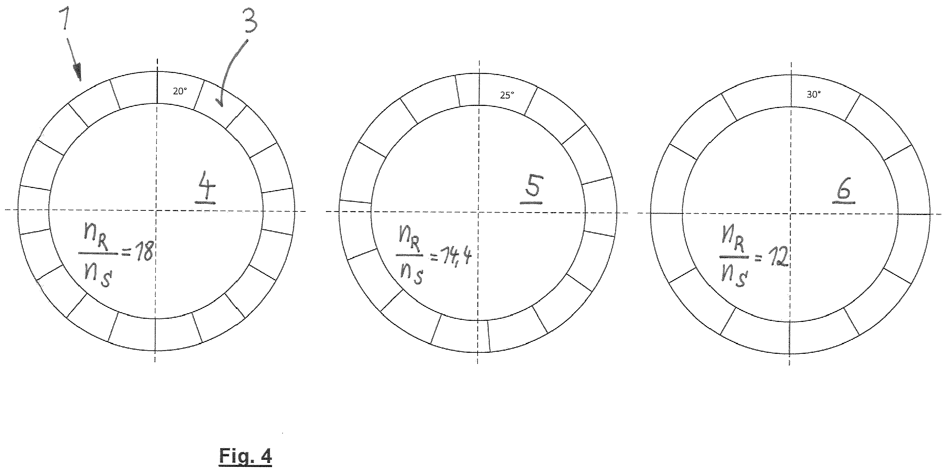

In Figur 4 ist in der Darstellung analog zu Figur 2 ein Ausführungsbeispiel der Erfindung wiedergegeben. Schematisch dargestellt ist für drei Schneckengänge 4, 5 und 6 der Schleifschnecke 1 (siehe Figur 1) die abrasive Oberfläche 3, die mittels der Abrichtrolle 2 profiliert wurde. Zu erkennen ist, dass das Verhältnis der Drehzahl n_{R} der Abrichtrolle zur Drehzahl n_{S} der Schleifschnecke in den drei Schneckengängen unterschiedlich ist. Im ersten Schneckengang 4 beträgt das genannte Verhältnis n_{R}/n_{S} 18, im zweiten Schneckengang 5 beträgt es 14,4 und im dritten Schneckengang 6 beträgt es 12. Demgemäß ergeben sich in den drei Schneckengängen 4, 5 und 6 unterschiedliche Profilierung, da das Abrichten in den verschiedenen Gängen mit unterschiedlichen Abrichtparametern erfolgte.

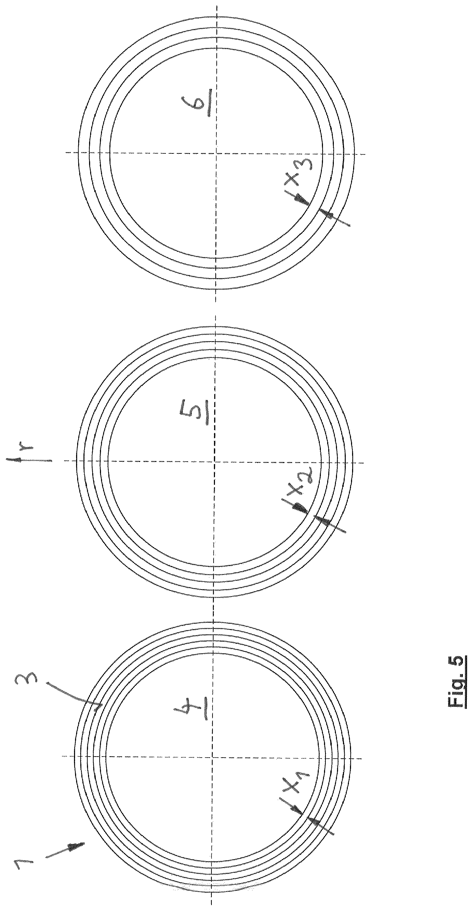

In Figur 5 ist analog zu Figur 3 ein anderes Ausführungsbeispiel der Erfindung wiedergegeben, wobei hier die abrasive Oberfläche 3 mittels topologischen Abrichtens profiliert wurde. Wie aus den drei Darstellungen in Figur 5 für die Schneckengänge 4, 5 und 6 ersichtlich ist, wurde für den Abstand x (gemessen in radiale Richtung r der Schleifschnecke 1) der einzelnen linienförmige Abrichthübe jeweils ein unterschiedlicher Wert gewählt, so dass die Überdeckung der Profilierung in den einzelnen Gängen unterschiedlich ist.

Das vorgeschlagene Konzept stellt also darauf ab, dass beim Abrichten (insbesondere mit einer konventionellen Kombi-Abrichtrolle oder mit einer flexiblen Abrichtrolle) die Drehzahl der Abrichtwerkzeuges und/oder die Drehzahl des Schleifwerkzeuges bzw. die Bahngeschwindigkeit in jedem Gang der Schnecke anders gewählt ist, so das unterschiedliche Abrichtparameter vorliegen. Damit werden die Abdrücke der Abrichtrolle und somit die Topografie auf der Manteloberfläche jedes Schneckenganges unterschiedlich.

Wenn die Gangzahl der Schleifschnecke und die Zähnezahl des Werkstückes nicht ganzzahlig teilbar sind (was dem angestrebten und somit häufigsten Bearbeitungsfall entspricht), kommen alle Gänge der Schleifschnecke in einer Zahnlücke des Werkstückes nacheinander zum Einsatz. Da alle Schneckengänge eine unterschiedliche Topografie haben, wird die Erzeugung der Oberfläche auf der Zahnflanke insbesondere in Flankenlinienrichtung weniger periodisch und mehr variabel.

In sehr vorteilhafter Weise hat das vorgeschlagene Verfahren keinerlei negative Wirkung auf die Produktivität, da die gewünschten Änderungen (d. h. die Änderung der Abrichtparameter) lediglich anders von der Maschinensteuerung vorgegeben werden.

Beim topologischen Abrichten (s. Figur 5) wird der Überdeckungsgrad in jedem Gang der Schnecke anders gewählt. Entsprechend wie im Fall des konventionellen Abrichtens bilden sich die Unterschiede in der Werkzeugtopografie in jedem Gang ab, was sich dann entsprechend nach dem Schleifen auf den Zahnflanken des Werkstücks wiederspiegelt. Allerdings liegt die Variabilität der so erzeugten Oberfläche in diesem Fall mehr in der Flankenprofilrichtung (d. h. sie ändert sich in radiale Richtung r).

Das geänderte Drehzahlverhältnis n_{R}/n_{S} oder der geänderte Abstand x (d. h. der Überdeckungsgrad) müssen natürlich nicht absteigend von Gang zu Gang variiert werden, wie es in den Figuren 4 und 5 illustriert ist. Es kann auch eine aufsteigende Tendenz oder eine gänzlich variable Gestaltung vorgesehen werden.

Die Änderung der Abrichtparameter von Gang zu Gang wird bevorzugt so variiert, dass das beste Ergebnis bezüglich der Laufruhe der Verzahnung des Zahnrads erzielt wird.

Dabei ist es auch möglich, dass einige Gänge der Schleifschnecke mit gleichen Parametern bearbeitet werden und nur ein Gang oder mehrere andere Gänge mit den veränderten Abrichtparametern profiliert werden.

### Bezugszeichenliste:

- 1: mehrgängige Schleifschnecke
- 2: Abrichtwerkzeug (Abrichtrolle)
- 3: abrasive Oberfläche
- 4: erster Gang der Schleifschnecke
- 5: zweiter Gang der Schleifschnecke
- 6: dritter Gang der Schleifschnecke

- n_{S}: Drehzahl der Schleifschnecke
- n_{R}: Drehzahl der Abrichtrolle

- r: radiale Richtung
- x: Abstand der Abrichthübe

## Patentansprüche

1. Verfahren zum Abrichten einer mehrgängigen Schleifschnecke (1) mittels eines Abrichtwerkzeugs (2), bei dem die abrasiven Oberflächen (3) der einzelnen Gänge (4, 5, 6) der Schleifschnecke (1) nacheinander mit dem Abrichtwerkzeug (2) profiliert werden, wobei das Abrichten in mindestens zwei Gängen (4, 5, 6) mit unterschiedlichen Abrichtparametern erfolgt, so dass sich die Profilierung der abrasiven Oberflächen (3) der Gänge (4, 5, 6) voneinander unterscheiden,
**dadurch gekennzeichnet,**
**dass** die Abrichtparameter so gewählt werden, dass sich die abrasiven Oberflächen (3) mindestens zweier Gänge (4, 5, 6) in Richtung der Schraubenlinie des Ganges (4, 5, 6) betrachtet voneinander unterscheiden,
und/oder
**dass** die abrasiven Oberflächen (3) der einzelnen Gänge (4, 5, 6) durch topologisches Abrichten profiliert werden, wobei über die Höhe der abrasiven Oberfläche (3) mehrere linienförmige Abrichthübe durchgeführt werden, bei denen das Abrichtwerkzeug (2) in radiale Richtung (r) der Schleifschnecke (1) in vorgegebenen Abständen (x) geführt wird, wobei die Abstände (x) in jedem Gang (4, 5, 6) konstant sind, sich aber in mindestens zwei Gängen (4, 5, 6) unterscheiden.

2. Verfahren nach Anspruch 1, **dadurch gekennzeichnet, dass** das Abrichten in allen Gängen (4, 5, 6) mit unterschiedlichen Abrichtparametern erfolgt.

3. Verfahren nach Anspruch 1 oder 2, **dadurch gekennzeichnet, dass** die Schleifschnecke (1) während des Abrichtprozesses mit einer Drehzahl (n_{S}) rotiert, wobei die Drehzahl (n_{S}) der Schleifschnecke (1) beim Abrichten der abrasiven Oberflächen (3) eines Gangs (4, 5, 6) sich in mindestens zwei Gängen (4, 5, 6) unterscheidet.

4. Verfahren nach Anspruch 1 oder 2, **dadurch gekennzeichnet, dass** das Abrichtwerkzeug (2) eine Abrichtrolle ist, die während des Abrichtprozesses mit einer Drehzahl (n_{R}) rotiert, wobei die Drehzahl (n_{R}) der Abrichtrolle (2) beim Abrichten der abrasiven Oberflächen (3) eines Gangs (4, 5, 6) sich in mindestens zwei Gängen (4, 5, 6) unterscheidet.

5. Verfahren nach Anspruch 1 oder 2, **dadurch gekennzeichnet, dass** die Schleifschnecke (1) während des Abrichtprozesses mit einer Drehzahl (n_{S}) rotiert und das Abrichtwerkzeug (2) eine Abrichtrolle ist, die während des Abrichtprozesses mit einer Drehzahl (n_{R}) rotiert, wobei das Verhältnis der Drehzahlen (n_{S}, n_{R}) beim Abrichten der abrasiven Oberflächen (3) eines Gangs (4, 5, 6) konstant ist, sich aber in mindestens zwei Gängen (4, 5, 6) unterscheidet.

6. Verfahren nach Anspruch 5, **dadurch gekennzeichnet, dass** sich das Verhältnis der Drehzahl (n_{S}) der Schleifschnecke (1) und der Drehzahl (n_{R}) der Abrichtrolle (2) zwischen mindestens zwei Gängen (4, 5, 6) um mindestens 5 %, vorzugsweise um mindestens 10 % und besonders bevorzugt um mindestens 15 % unterscheidet.

7. Verfahren nach einem der Ansprüche 1 bis 6, **dadurch gekennzeichnet, dass** sich die Abstände (x) zwischen mindestens zwei Gängen (4, 5, 6) um mindestens 5 %, vorzugsweise um mindestens 10 % und besonders bevorzugt um mindestens 15 % unterscheiden.

8. Verfahren nach einem der Ansprüche 1 bis 7, **dadurch gekennzeichnet, dass** die Schleifschnecke (1) während des Abrichtprozesses rotiert und das Abrichtwerkzeug (2) eine Abrichtrolle ist, die während des Abrichtprozesses rotiert, wobei das Abrichten in einem Gang (4, 5, 6) im Gleichlauf von Schleifschnecke (1) und Abrichtrolle (2) erfolgt und das Abrichten in mindestens einem anderen Gang (4, 5, 6) im Gegenlauf von Schleifschnecke (1) und Abrichtrolle (2) erfolgt.
